# EUROPÄISCHE PATENTSCHRIFT

(11) **EP 0 800 419 B1**
(45) Veröffentlichungstag und Bekanntmachung des Hinweises auf die Patenterteilung: **05.12.2001**
(21) Anmeldenummer: 95942024.1
(22) Anmeldetag: 20.12.1995
(51) Int. Cl.: B01D 63/08

(54) **VORRICHTUNG ZUR TRENNUNG VON STOFFGEMISCHEN MITTELS VONEINANDER BEABSTANDETER, GESTAPELTER MEMBRANELEMENTE**
DEVICE FOR SEPARATING MIXTURES USING STACKED SPACED MEMBRANE ELEMENTS
DISPOSITIF DE SEPARATION DES CONSTITUANTS DE MELANGES AU MOYEN D'ELEMENTS A MEMBRANES EMPILES ET ECARTES LES UNS DES AUTRES

(30) Priorität: 30.12.1994 DE 4447211
(43) Veröffentlichungstag der Anmeldung: 15.10.1997
(73) Patentinhaber: GKSS-FORSCHUNGSZENTRUM GEESTHACHT GMBH, 21502 Geesthacht (DE)
(72) Erfinder: HILGENDORFF, Walter, D-21395 Tespe (DE); KAHN, Gerhard, D-21502 Geesthacht (DE)
(74) Vertreter: Niedmers, Ole, Dipl.-Phys.
(86) Internationale Anmeldenummer: DE9501822
(87) Internationale Veröffentlichungsnummer: WO9620775

(56) Entgegenhaltungen:
- WO-A-81/01371
- DE-A- 3 507 908
- DE-A- 4 030 657
- US-A- 4 556 488
- US-A- 4 892 657
- US-A- 4 995 977

## Beschreibung

Die Erfindung betrifft eine Vorrichtung zur Trennung von Stoffgemischen mittels voneinander beabstandeter, gestapelter Membranelemente in Form von Membrantaschen, die eine Bohrung zum Ablauf eines Permeats in ein den Membranelementenstapel durchquerendes und zusammenspannendes Permeatabflußrohr aufweisen, wobei die Vorrichtung eine Zuführung für das Stoffgemisch und Abführungen für das Retentat und das Permeat umfaßt und die Membranelemente in jeweils zwischen zwei Membranelementen oder einem Membranelement und einem Leit- bzw. Umlenkelement gebildeten Stoffgemischkammern vom Stoffgemisch an ihren Oberflächen im wesentlichen flächig angeströmt werden, und wobei jeweils zwischen zwei Membranelementen oder zwischen dem Membranelement und dem Umlenkelement ein um die Bohrung des Membranelements bzw. des Umlenkelements herum angeordnetes ringförmiges Abstützelement angeordnet ist, und die Dichtung zwischen den Abstützelementen und dem Membranelement bzw. dem Umlenkelement durch ein am Außenumfang des Abstützelements angeordnetes Dichtelement gebildet wird.

Eine Vorrichtung dieser Art ist bekannt (DE-A-40 30 657, DE-C-35 07 908). Diese bekannte Vorrichtung ist für hohe Permeatströme ausgelegt, wobei der Membranstapel in der Vorrichtung mit Hilfe von Innenringen, die beidseitig teilweise von jeweils einer Membrantasche erfaßt werden, und Drainageringen montiert werden. Mit dem Innenring werden die Membrantaschen auf Abstand gehalten, wobei gemeinsam mit dem Drainagering dann ein druckfester Membranstapel aufgebaut werden kann. Für Einsatzfälle mit geringen Permeatflüssen, bei denen der Permeataustrittsquerschnitt des bekannten Drainagerings nicht voll ausnutzbar ist, ist die Volumenausnutzung eines derart aufgebauten Membranstapels zu gering und somit zu teuer.

Aus der WO-A-81 01 371 ist ebenfalls eine Vorrichtung ähnlicher Art bekannt, die sich zum Ziel gesetzt hatte, die Membranflächen bis dahin bekannter Membranelemente besser auszunutzen, so daß ein höherer Wirkungsgrad als bisher erreicht wird. Des weiteren sollte damit im Vergleich zu bis dahin bekannten Vorrichtungen dieser Art die Lebensdauer der Membranelemente vergrößert werden und ein definiertes Zusammenhalten des Membranelementenstapels erreicht werden, was ebenfalls bis dahin nur als ungenügend möglich angesehen woreden war.

Es ist Aufgabe der vorliegenden Erfindung eine Vorrichtung zu schaffen, mit der beispielsweise eine Abtrennung von Wasserdampf aus Erdgasströmen unter Berücksichtigung der im Vergleich zu anderen Vorrichtungen dieser Art geringeren Permeatströme und den daraus resultierenden engeren Permeatquerschnitten möglich ist, die einfach und kostengünstig bereitstellbar ist und leicht montiert werden kann und bei der auch hohe Drücke bzw. Druckunterschiede innerhalb der Vorrichtung nicht zu Undichtigkeiten führen.

Gelöst wird die Aufgabe gemäß der Erfindung dadurch, daß am Außenumfang eine das Abstützelement umlaufende Nut ausgebildet ist und das Abstützelement zur Bildung eines definierten axialen Abstandes zwischen jeweils zwei Abstandselementen um seine Innenbohrung herum eine Mehrzahl erhaben von beiden Oberflächen wegstehender Felder aufweist, zwischen denen jeweils Permeatabflußrinnen ausgebildet sind, wobei radial außen an dem Bereich des Abstützrings, in dem die erhabenen Felder angeordnet sind, auf der einen Oberfläche des Abstützelementes eine Mehrzahl stiftartiger Vorsprünge angeordnet ist, die auch der Zentrierung der Membranelemente dienen, wohingegen auf der anderen Oberfläche eine Mehrzahl von Bohrungen bzw. Vertiefungen ausgebildet ist, und wobei die Vorsprünge eines Abstandselements in die Vertiefungen zweier benachbarter Abstützelemente eingreifen.

Der Vorteil der erfindungsgemäßen Lösung besteht im wesentlichen darin, daß somit auf einfache Weise ein druckfester Membranstapel für eine Vorichtung zur Gasseparation hergestellt werden kann, bei dem im Vergleich zu den bisherigen Vorrichtungen eine sehr viel höhere Packungsdichte der den Membranstapel bildenden Membranelemente möglich ist und bei dem durch die notwendigen Verspannkräfte und die Belastung durch die Druckdifferenzen nicht die Membranelemente im Bereich des engsten Permeatquerschnitts zusammengedrückt werden, so daß erhöhte Setzbeträge vermieden werden. Das heißt mit anderen Worten, daß die axialen Kräfte zur Bildung des druckdichten Membranstapels derart geleitet werden, daß die weichen, erfindungsgemäß ohne Drainageringe ausgerüsteten Membranelemente am Permeataustrittsquerschnitt nicht belastet und somit nicht verengt werden. Anders als bisher, wo die Abstützung der axialen Kräfte für ein Membranelement über den Innenring, zwei Drainageringe und zwei dazwischenliegende Membranen erfolgt, ist erfindungsgemäß nur noch eine anstelle bisher fünf Trennebenen vorhanden, wobei erfindungsgemäß auch die weiche Membranzwischenlage entfällt, so daß, wie angestrebt, deutlich geringere Setzbeträge im Membranstapel auftreten, oder aber es kann bei gleichem Setzbetrag die Anzahl der Membranelemente erhöht werden. In die am Außenumfang ausgebildete, das Abstützelement umlaufende Nut kann beispielsweise das Dichtelement eingesetzt werden. So kann beispielsweise das Dichtelement bei Beschädigung oder bei einer grundsätzlich notwendig werdenden Erneuerung auf einfache Weise aus der Nut entfernt werden und gegen ein neues Dichtelement ausgetauscht werden. Die Abstützelemente stützen sich beim Membranstapel unter jeweiligem Einschluß eines Membranelements zwischen zwei Abstützelementen ab. Um den Abfluß des Permeats, das bei den Membranelementen in Form von Membrantaschen stirnseitig aus dem zentralen Permeatabflußloch des Membranelementes austritt, in ein zentrales Permeatabflußrohr des Membranstapels problemlos zu ermöglichen, ist das Abstützelement um seine Innenbohrung herum mit einer Mehrzahl von erhaben von beiden Oberflächen vorstehenden Feldern versehen, zwischen denen jeweils Permeatabflußrinnen ausgebildet sind. Durch die auf einer Oberfläche des Abstützelements angeordnete Mehrzahl stiftartiger Vorsprünge und die auf der anderen Oberfläche ausgebildete Mehrzahl von Bohrungen bzw. Vertiefungen, wobei die Vorsprünge eines Abstützelements in die Bohrungen bzw. Vertiefungen zweier benachbarter Abstützelemente eingreifen, kann auf einfache Weise eine Zentrierung der Abstützelemente erfolgen, die beispielsweise somit um einen vorbestimmbaren Verdrehungsgrad zueinander gestapelt werden können. Die Vorsprünge dienen gleichzeitig der Zentrierung der Membranelemente.

Wird bei der bekannten Vorrichtung (DE-A-40 30 657) anstelle des Innenrings der Abstützring eingesetzt, so hätte dies auch für die Anwendungen mit höherem Permeatfluß den Vorteil, daß die Setzbeträge deutlich reduziert werden.

Die Dichtung am Außenumfang zwischen Abstützelement und den jeweils angrenzenden Membranelementen kann grundsätzlich auf beliebige Weise ausgebildet sein, beispielsweise in Form einer umlaufenden Dichtlippe auf beiden äußeren Flächen des Abschlußelements.

Das Dichtelement, daß vorzugsweise ringförmig ausgebildet ist, ist vorteilhafterweise in Form eines 0-Ringes ausgebildet, der aus einem geeigneten polymeren Werkstoff bestehen kann.

Die Permeatabflußrinnen münden vorzugsweise in axialen Nuten, die bei einer weiteren vorteilhaften Ausgestaltung der Vorrichtung um die Innenbohrung des Abstützelements herum angeordnet sind. Durch beide Maßnahmen kann sichergestellt werden, daß das Permeat ohne Widerstand zum erwähnten zentralen Permeatabflußrohr des Membranstapels fließen und von dort aus der Vorrichtung herausgeleitet werden kann.

Vorteilhafterweise ist in der Innenbohrung des Abstützelements eine Mehrzahl radial ausgerichteter Vorsprünge angeordnet, die dafür sorgen, daß immer ein Ringspalt in der Innenbohrung des Abstützelements zum ungestörten Abfließen des Permeats erhalten wird, wenn beispielsweise, wie erwähnt, das den, Membranstapel durchquerende Permeatabflußrohr alle Abstützelemente des Membranstapels durchquert.

Das Abstützelement selbst kann aus beliebigen geeigneten Werkstoffen hergestellt sein, es besteht aber vorzugsweise aus Kunststoff, so daß es in einem Spritzvorgang schnell und kostengünstig herstellbar ist.

Der Kunststoff selbst kann beliebiger geeigneter Art sein, beispielsweise PVDF (Polyvinylidenfluorid).

Um die Stabilität des Abstützelements bei einem Aufbau aus Kunststoff zu erhöhen, kann es ebenfalls vorteilhaft sein, den Kunststoff mit Glasfasern oder anderen Füllstoffen wie z.B. Kohlefasern, Glaskugeln oder Mineralien zu verstärken. Bevorzugt werden solche Werkstoffe, deren lineare Wärmeausdehnungskoeffizienten mit dem des Permeatabflußrohres nahezu übereinstimmen, damit beim Einsatz unter erhöhten Temperaturen keine zusätzlichen Wärmespannungen und damit verbundene plastische Verformungen auftreten können. Außerdem kann dadurch auf federnde Vorrichtungen zum Ausgleich von Wärmeausdehnungen verzichtet werden.

Um Umlenkscheiben, die anstelle von Membranelementen im Membranstapel angeordnet werden können, an beliebigen geeigneten, vorwählbaren Stellen einsetzen zu können, ist es vorteilhaft, die Dicke der Membranelemente gleich der Dicke der Umlenkelemente auszubilden.

Die Erfindung wird nun unter Bezugnahme auf die nachfolgenden schematischen Zeichnungen anhand eines Ausführungsbeispiels eingehend beschrieben. Darin zeigen:
- Fig. 1: im Schnitt eine Vorrichtung mit einem typischen Aufbau eines schematisiert dargestellten Membranstapels,
- Fig. 2: in vergrößerter Darstellung einen Ausschnitt des Membranstapels von Fig. 1,
- Fig. 3: einen Ausschnitt des Membranstapels von Fig. 1 im Zusammenwirken mit dem durch die Innenbohrung der Abstützelemente hindurchgehenden Permeatabflußrohr,
- Fig. 4a: eine Draufsicht auf ein Abstutzelement in annähernd natürlicher Größe,
- Fig. 4b: eine Seitenansicht im Schnitt längs der Linie A-B von Fig. 5 das Abstützelement,
- Fig. 5: eine Draufsicht auf ein in Form einer Membrantasche ausgebildetes Membranelement und
- Fig. 6: eine Draufsicht auf ein Umlenkelement im gleichen Maßstab wie das in Fig. 6 dargestellte Membranelement.

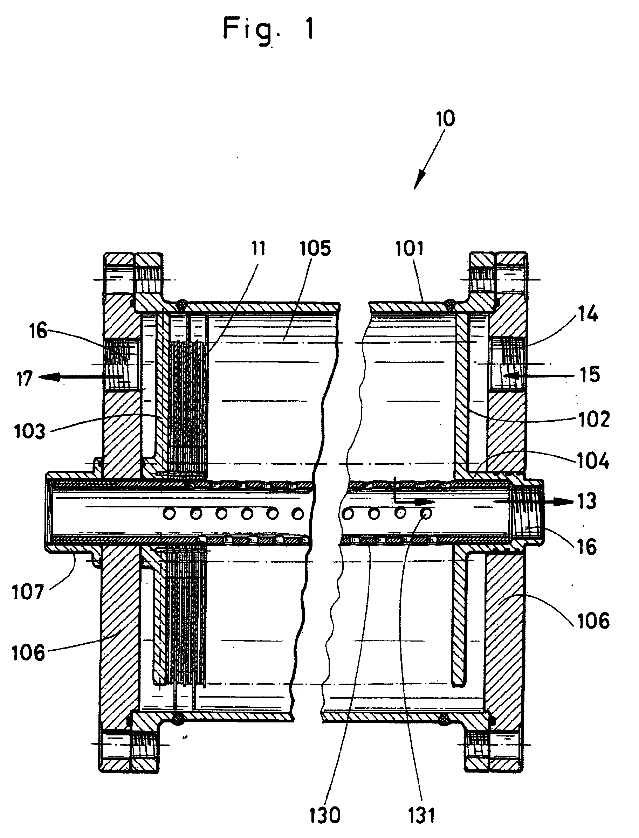

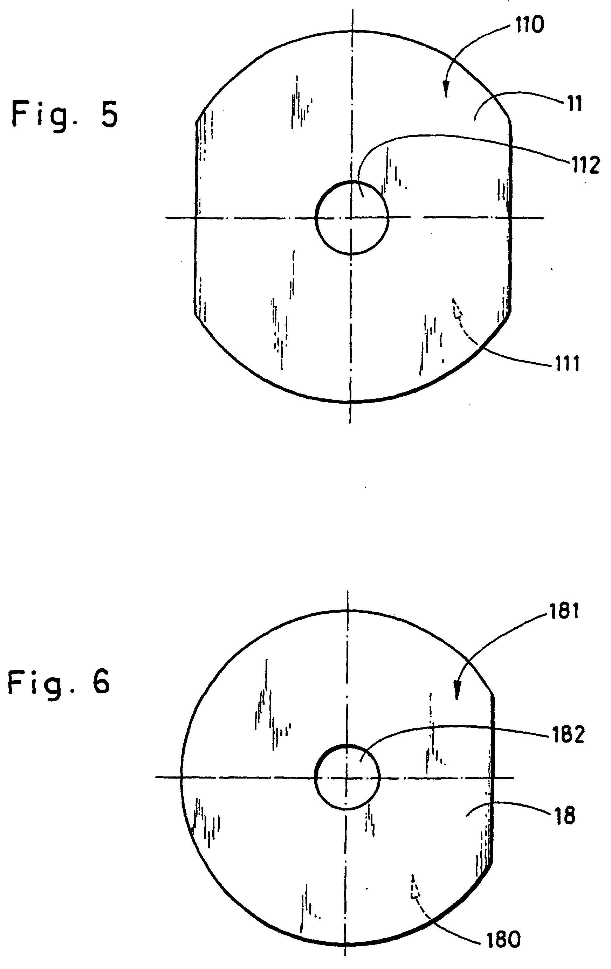

Die Vorrichtung 10, vgl. Fig. 1, entspricht im wesentlichen in ihrem mechanischen Aufbau allgemein bekannten Vorrichtungen dieser Art, wie sie seit langem eingesetzt werden und wie sie beispielsweise in der DE-35 07 908 beschrieben sind. Insofern wird hier nur auf Besonderheiten eingegangen, soweit die hier beschriebene Vorrichtung 10 sich von den bekannten Vorrichtungen unterscheidet. Ansonsten wird auf die bekannte Vorrichtung verwiesen. Die Vorrichtung 10 umfaßt in ihrem Innenraum einen Membranstapel 105, der mittels voneiander beabstandeter, gestapelter Membranelemente 11 in Form von Membrantaschen ausgebildet ist. Die Membranelemente 11 weisen eine Bohrung 112, vgl. Fig. 5, zum Ablauf des Permeats 13 auf. Die Vorrichtung 10 weist auch eine Zuführung 14 für das zu trennende Stoffgemisch 15 und Abführungen 16 für das Retentat 17 und das Permeat 13 auf, wobei das Permeat 13 regelmäßig bei Vorrichtungen dieser Art über ein vorrichtungszentrales Permeatabflußrohr 130 die Vorrichtung 10 verläßt.

Im Membranstapel 105 werden jeweils zwischen zwei Membranelementen 11 oder einem Membranelement 11 und einem wahlweise im Membranstapel 105 positionierbaren Leit-bzw. Umlenkelement 18 Stoffgemischkammern 150 gebildet, in denen das zu trennende Stoffgemisch 15 die Oberflächen 110, 111 der Membranelemente im wesentlichen flächig beim Durchströmen der Stoffgemischkammern 150 anströmt bzw. beaufschlagt.

Der grundsätzliche Aufbau derartiger Membranstapel 105 ist bekannt, insbesondere auch die Abdichtung der einzelnen Membranelemente 11 gegen den Permeatsammelraum, so daß an dieser Stelle darauf nicht weiter eingegangen zu werden braucht.

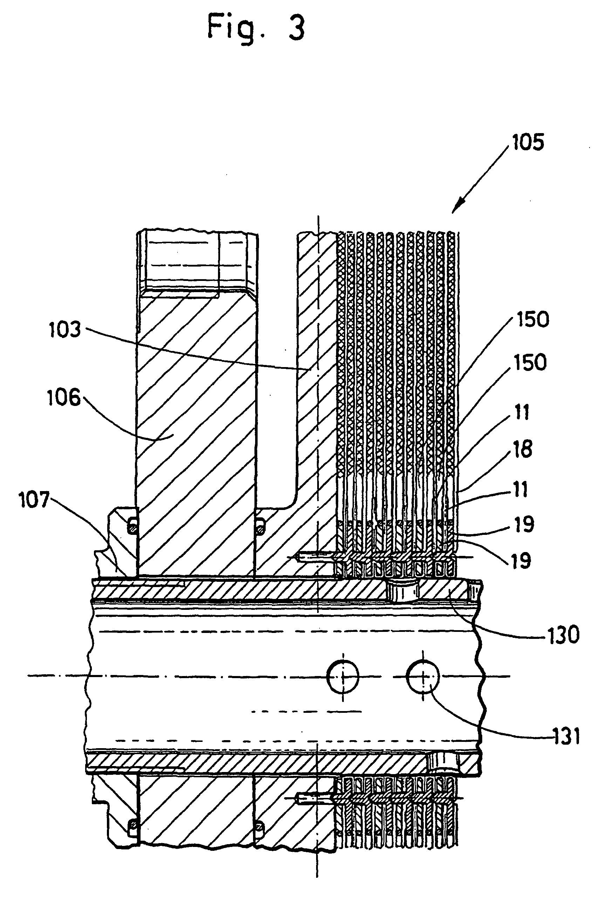

Anders als bei den bisherigen Membranstapeln 105 in Vorrichtungen 10 dieser Art ist jeweils zwischen zwei Membranelementen 11 oder zwischen dem Membranelement 11 und einem wahlweise im Membranstapel 105 positionierbaren Umlenkelement 18 ein um die Bohrung 112 des Membranelementes 1 1 bzw. die Bohrung 182 des Umlenkelementes 18 herum angeordnetes einziges ringförmiges Abstützelement 19 vorgesehen, vgl. insbesondere die Fig. 2, 3, 4. Das Abstützelement 19 weist an seinem Außenumfang 190 eine umlaufende Nut 192 auf, in der ein Dichtelement 191 in Form eines 0-Ringes aus polymerem Werkstoff angeordnet ist. Bei einem bestimmungsgemäß aufgebauten Membranstapel 105 wird somit eine Dichtung zwischen dem Abstützelement 19 und dem Membranelement 11 bzw. dem Umlenkelement 18 gebildet, d.h. es ist für die Festlegung des Abstandes und der Dichtung lediglich ein Abstützelement 19 erforderlich.

Der definierte axiale Abstand zweier Abstützelemente 19 wird durch eine Mehrzahl erhaben von beiden Oberflächen 194, 195 vorstehender Felder 196 gebildet. Zwischen den Feldern 196 sind Permeatabflußrinnen 197 ausgebildet. In der Innenbohrung 193 des Abstützelementes 19 ist eine Mehrzahl radial ausgerichteter Vorsprünge 200 angeordnet, die gewissermaßen als Abstandshalter zu dem Permeatabflußrohr 130 fungieren, so daß zwischen dem Außendurchmesser des Permeatabflußrohres 130 und der Innenwand der Innenbohrung 193 des Abstützelementes 19 ein Zwischenraum fortwährend gewährleistet ist, durch den das stirnseitig aus den Membranelementen 11 austretende Permeat 13 durch die Permeatabflußrinnen 197 hindurch in die Eintrittsöffnungen 131 des Permeatabflußrohres 130 gelangen kann und von dort aus der Vorrichtung 10 abgeführt werden kann. Um den vorerwähnten Permeatabfluß in den Zwischenraum zwischen Innenwand der Innenbohrung 193 des Abstützelementes 19 und dem Permeatabflußrohr zu erleichtern, ist im Bereich der Innenbohrung 193 des Abstützelementes 19 eine Mehrzahl axialer Nuten 202 ausgebildet.

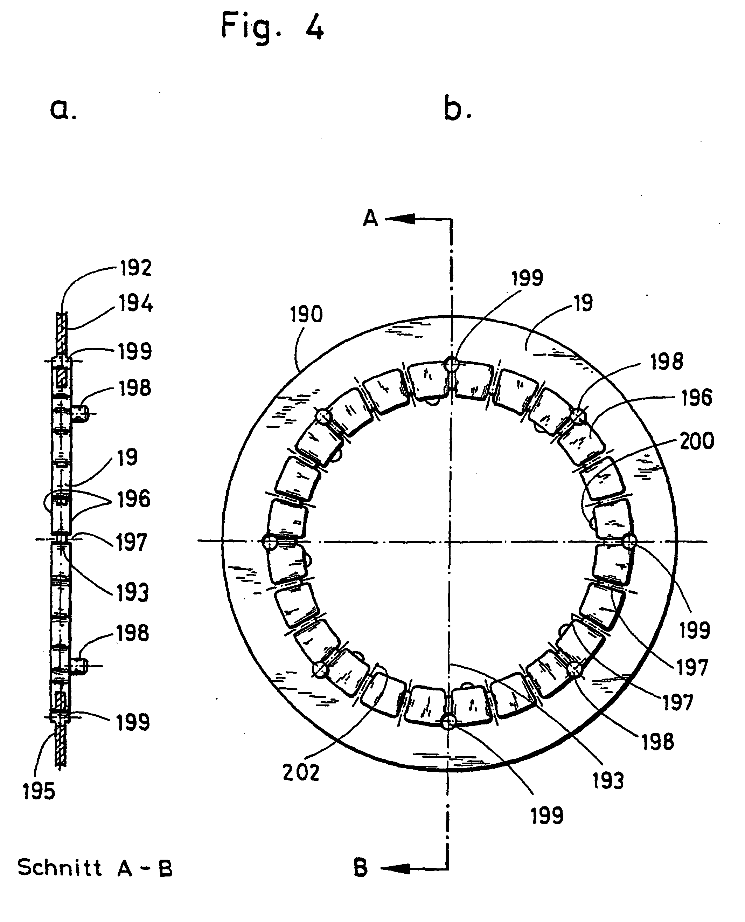

Auf einer Oberfläche 194 des Abstützelementes 19 ist eine Mehrzahl stiftartiger Vorsprünge 198 vorgesehen. Auf der anderen Oberfläche 195 kann eine Mehrzahl von Vertiefungen 199 ausgebildet sein. Die Vorsprünge 198 eines Abstützelementes 19 greifen in die Vertiefungen 199 zweier benachbarter Abstützelemente ein. Die Vertiefungen 199 sind auch als Durchgangslöcher, vgl. Fig. 4b, ausgebildet. Die Vorsprünge 198 bilden in Verbindung mit den Vertiefungen 199 gegenseitige Zentrierungen benachbarter Abstützelemente 19, wobei die Vorsprünge 198 gegenüber den Vertiefungen 199 um einen Drehversatz, beispielsweise um 45°, zueinander gedreht sind, so daß bei einer Stapelung aufeinander immer eine weitere Verdrehung um 45° erfolgt. Aufgrund des Drehversatzes der Vorsprünge 198 gegenüber den Vertiefungen 199 zueinander kommen beispielsweise die Vorsprünge 198 erheblich länger ausgebildet werden als bei einer 0°/90°-Anordnung, wodurch die Montage gegenüber einer Anordnung ohne Drehversatz erheblich erleichtert wird.

Mittels der schon erwähnten Umlenkelemente 18, vgl. Fig. 6, 2 und 3, die anstatt eines Membranelementes 11 im Membranstapel 105 angeordnet werden können, ist eine Umlenkung des zu trennenden Stoffgemisches innerhalb des Membranstapels 105 möglich. Insbesondere dann, wenn die Dicke 113 des Membranelements 11 der Dicke 183 des Umlenkelementes 18 entspricht, können die Umlenkelemente 18 grundsätzlich gemäß den Erfordernissen frei wählbar im Membranstapel 105 angeordnet werden.

Mittels der hier beschriebenen Abstützelemente 19 kann der Abstand von einem zum nächsten Membranelement 11 gegenüber den bisher realisierbaren Möglichkeiten deutlich reduziert werden, was bei gleicher Länge des Membranstapels 105 zu einer beträchtlichen Erhöhung der Anzahl der Membranelemente 11 führt. Da die Kosten für Membranstapel 105 linear mit der Anzahl der Membranelemente 11 steigen, der Druckbehälter der Vorrichtung 10 aber grundsätzlich gleich ist, ergibt sich durch die hier vorgeschlagene Vorrichtung 10 ein erheblicher Kostenvorteil pro m² installierter Membranfläche. Darüberhinaus ermöglichen die hier vorgeschlagenen Abstützelemente 19 einen sehr viel steiferen Aufbau des Membranstapels 105 als bisherige Membranstapel, wodurch auch eine höhere Sicherheit gegen Undichtigkeit erreicht wird. Eine höhere Steifigkeit und damit verbundener geringerer Setzbetrag kann auch bei der bekannten Vorrichtung (DE-A-40 30 657) erreicht werden, wenn der Innenring gegen den Abstützring ausgetauscht wird. Für diesen Fall müßten natürlich die erhabenen Felder erhöht werden. Die Abstützelemente 19 selbst können preisgünstig aus Kunststoff, beispielsweise PVDF (Polyvinylidenflourid) , der glasfaserverstärkt ausgebildet sein kann, hergestellt werden, grundsätzlich eignen sich aber auch beliebige andere geeignete Werkstoffe in Abhängigkeit des gewählten zu trennenden Stoffgemisches.

Die hier beschriebene Vorrichtung 10 unterscheidet sich in ihrem mechanischen Aufbau von der aus der DE-C-35 07 908 beschriebenen Form dadurch, daß die Möglichkeit besteht, während des Betriebes der Vorrichtung 10 auftretende Setzbeträge durch Nachspannen ausgleichen zu können. Das Nachspannen kann während des Betriebes mit Hilfe einer auch als Kappe ausgebildeten Spannhülse 107 erfolgen, ohne daß die Vorrichtung 10 geöffnet wird, da auf die Ringfläche zwischen dem Durchmesser des Stapels aus Abstützelementen 19 und dem Durchmesser des Endelementes 104 eine Kraft (Ringfläche x Betriebsdruck) auf den Membranelementestapel 105 ausgeübt wird, die den Stapel zum scheibenförmigen Abschlußelement 106, das das zylindrische Gehäuseteil 101 beidseitig abschließt, drückt, und zwar zu dem Abschlußelement 106, das, vergleiche Fig. 1, eine Abführung 16 für das Retentat 17 aufweist. Die Vorrichtung 10 erlaubt somit eine optimale Vorspannung der Abstützelemente 19 nicht nur vor, sondern auch während des Betriebes der Vorrichtung 10.

### Bezugszeichenliste

- 10: Vorrichtung
- 101: zylindrisches Gehäuseteil
- 102: Spannelement
- 103: Spannelement
- 104: Endelement
- 105: Membranelementestapel
- 106: Abschlußelement
- 107: Spannhülse
- 11: Membranelement
- 110: Oberfläche
- 111: Oberfläche
- 112: Bohrung (Membranelement)
- 113: Dicke
- 13: Permeat
- 130: Permeatabflußrohr
- 131: Eintrittsöffnungen
- 14: Zuführung
- 15: Stoffgemisch
- 150: Stoffgemischkammer
- 16: Abführung
- 17: Retentat
- 18: Umlenkelement
- 180: Oberfläche
- 181: Oberfläche
- 182: Bohrung
- 183: Dicke
- 19: Abstützelement
- 190: Außenumfang
- 191: Dichtelement
- 192: Nut
- 193: Innenbohrung
- 194: Oberfläche
- 195: Oberfläche
- 196: Feld
- 197: Permeatabflußrinne
- 198: Vorsprung
- 199: Vertiefung
- 200: Vorsprung (radial)

- 202: Nut

## Patentansprüche

1. Vorrichtung (10) zur Trennung von Stoffgemischen mittels voneinander beabstandeter, gestapelter Membranelemente (11) in Form von Membrantaschen, die eine Bohrung (112) zum Ablauf eines Permeats (13) in ein den Membranelementstapel (105) durchquerendes und zusammenspannendes Permeatabflußrohr (130) aufweisen, wobei die Vorrichtung (10) eine Zuführung (14) für das Stoffgemisch (15) und Abführungen für das Retentat (17) und das Permeat (13) umfaßt und die Membranelemente (11) in jeweils zwischen zwei Membranelementen (11) oder einem Membranelement (11) und einem Leit- bzw. Umlenkelement (18) gebildeten Stoffgemischkammern (150) vom Stoffgemisch (15) an ihren Oberflächen im wesentlichen flächig angeströmt werden, wobei jeweils zwischen zwei Membranelementen (11) oder zwischen dem Membranelement (11) und dem Umlenkelement (18) ein um die Bohrung des Membranelements (11) bzw. des Umlenkelements (18) herum angeordnetes ringförmiges Abstützelement (19) angeordnet ist, und die Dichtung zwischen dem Abstützelement (19) und dem Membranelement (11) bzw. dem Umlenkelement (18) durch ein am Außenumfang (190) des Abstützelements (19) angeordnetes Dichtelement (191) gebildet wird, **dadurch gekennzeichnet, daß** am Außenumfang (190) eine das Abstützelement (19) umlaufende Nut (192) ausgebildet ist und das Abstützelement (19) zur Bildung eines definierten axialen Abstandes zwischen jeweils zwei Abstandselementen (19) um seine Innenbohrung (193) herum eine Mehrzahl erhaben von beiden Oberflächen (194, 195) vorstehender Felder (196) aufweist, zwischen denen jeweils Permeatabflußrinnen (197) ausgebildet sind, wobei radial außen an dem Bereich des Abstützrings, in dem die erhabenen Felder angeordnet sind, auf der einen Oberfläche (194) des Abstützelementes (19) eine Mehrzahl stiftartiger Vorsprünge (198) angeordnet ist, die auch der Zentrierung der Membranelemente (19) dienen, wohingegen auf der anderen Oberfläche (195) eine Mehrzahl von Bohrungen bzw. Vertiefungen (199) ausgebildet ist und wobei die Vorsprünge (198) eines Abstützelements (19) in die Bohrungen bzw. Vertiefungen (199) zweier benachbarter Abstützelemente (19) eingreifen

2. Vorrichtung nach Anspruch 1 **dadurch gekennzeichnet, daß** das Dichtelement (191) ein 0-Ring aus polymerem Werkstoff ist.

3. Vorrichtung nach einem oder beiden der Ansprüche 1 oder 2, **dadurch gekennzeichnet, daß** das Abstützelement (19) um seine Innenbohrung herum eine Mehrzahl axialer Nuten (202) aufweist.

4. Vorrichtung nach einem oder mehreren der Ansprüche 1 bis 3, **dadurch gekennzeichnet, daß** in der Innenbohrung (193) eine Mehrzahl radial ausgerichteter Vorsprünge (200) angeordnet ist.

5. Vorrichtung nach einem oder mehreren der Ansprüche 1 bis 4, **dadurch gekennzeichnet, daß** das Abstützelement (19) aus Kunststoff besteht.

6. Vorrichtung nach Anspruch 5, **dadurch gekennzeichnet, daß** der Kunststoff PVDF ist.

7. Vorrichtung nach einem oder beiden der Ansprüche 5 oder 6, **dadurch gekennzeichnet, daß** der Kunststoff durch Füllstoffe verstärkt ist.

8. Vorrichtung nach einem oder mehreren der Ansprüche 1 bis 7, **dadurch gekennzeichnet, daß** für den Fall, daß Umlenkelemente vorhanden sind die Dicke (113) der Membranelemente (11) gleich der Dicke (183) der Umlenkelemente (18) ist.

9. Vorrichtung nach einem oder mehreren der Ansprüche 1 bis 8, **dadurch gekennzeichnet, daß** der Außendurchmesser des Abstützelementes (19) größer als der Durchmesser eines Endelementes (104) eines scheibenförmigen Spannelementes (102) ist, mit dem der Membranelementestapel (105) verspannbar ist.

10. Vorrichtung nach Anspruch 9, **dadurch gekennzeichnet, daß** eines der zwei beidseitig des Membranstapels angeordneten scheibenförmigen Abschlußelementen (106), mit dem ein zylindrisches Gehäuseteil (101) der Vorrichtung (10) verschließbar ist, im wesentlichen fest mit dem durch scheibenförmige Spannelemente (102, 103) verspannten Membranelementestapel (105) verbunden ist.

11. Vorrichtung nach einem oder beiden der Ansprüche 9 oder 10, **dadurch gekennzeichnet, daß** die scheibenförmigen Spannelemente (102, 103) derart miteinander verspannbar sind, daß im Betrieb der Vorrichtung (10) bei den Abstützelementen (19) ggf. auftretende Setzbeträge nicht zu einem Undichtwerden des Membranelementestapels (105) führen.

12. Vorrichtung nach Anspruch 10 oder einem auf Anspruch 10 rückbezogenen Anspruch 11, **dadurch gekennzeichnet, daß** eine als Kappe ausgebildete Spannhülse (107) auf einen durch das nicht fest mit dem Membranstapel verbundenen Abschlußelement (106) hindurchragenden Teil des Permeatabflußrohres (130) aufsetzbar ist.

## Claims

1. Device (10) for separating mixtures of substances by means of stacked membrane elements spaced a distance apart (11) in the form of membrane pockets having a hole (112) for the outflow of a permeate (13) into a permeate outflow pipe (130) traversing and clamping together the stack of membrane elements (105), whereby the device (10) comprises an inlet (14) for the mixture of substances (15) and outlets for the retentate (17) and the permeate (13), and the mixture of substances (15) flows against essentially the whole surface area of the membrane elements (11) in substance mixture chambers (150) formed in each case between two membrane elements (11) or one membrane element (11) and a guide or deflection element (18) as the case may be, whereby an annular support element (19), arranged around the hole in the membrane element (11) or the deflector element (18) as the case may be, is arranged in each case between two membrane elements (11) or between the membrane element (11) and the deflector element (18), and the seal between the support element (19) and the membrane element (11) or the deflector element (19) as the case may be is formed by a sealing element (191) arranged at the outer periphery (190) of the support element (19), **characterized in that** a groove (192) encircling the support element (19) is created at the outer periphery (190) and **in that**, in order to form a defined axial spacing distance between two separator elements (19), in each case the support element (19) has around its internal hole (193) and protruding from both surfaces (194, 195) a plurality of projecting fields (196) between each of which permeate outflow channels (197) are formed, whereby, radially and externally on the area of the support ring in which the raised fields are arranged, a plurality of pin-like projections (198) is arranged on one surface (194) of the support element (19), whose purpose is also to centre the membrane elements (19), whereas a plurality of holes and/or recesses (199) is formed on the other surface (195), whereby the projections (198) of one support element (19) engage in the holes and/or recesses (199) of two neighbouring support elements (19).

2. Device according to Claim 1, **characterized in that** the sealing element (191) is an 0-ring made from polymeric construction material.

3. Device according to one or both of the Claims 1 or 2, **characterized in that** the support element (19) has a plurality of axial grooves (202) around its internal bore.

4. Device according to one or more of the Claims 1 to 3, **characterized in that** a plurality of radially aligned projections (200) is arranged in the internal bore (193).

5. Device according to one or more of the Claims 1 to 4, **characterized in that** the support element (19) consists of plastic.

6. Device according to Claim 5, **characterized in that** the plastic is PVDF.

7. Device according to one or both of the Claims 5 or 6, **characterized in that** the plastic is reinforced by filler materials.

8. Device according to one or more of the Claims 1 to 7, **characterized in that**, in the case where deflector elements are present, the thickness (113) of the membrane elements (11) is equal to the thickness (183) of the deflector elements (18).

9. Device according to one or more of the Claims 1 to 8, **characterized in that** the external diameter of the support element (19) is larger than the diameter of an end element (104) of a disk-shaped clamping element (102) with which the stack of membrane elements (105) can be clamped.

10. Device according to Claim 9, **characterized in that** one of the two disk-shaped terminal elements (106) arranged on either side of the membrane stack and with which a cylindrical part of the housing (101) of the device (10) can be sealed, is attached essentially rigidly to the stack of membrane elements (105) clamped by means of disk-shaped clamping elements (102, 103).

11. Device according to one or both of the Claims 9 or 10, **characterized in that** the disk-shaped clamping elements (102, 103) can be clamped to one another in such a way that amounts of settlement that may arise at the support elements (19) during the operation of the device (10) do not cause the stack of membrane elements (105) to become leaky.

12. Device according to Claim 10 or to a Claim 11 referred back to Claim 10, **characterized in that** a clamping sleeve in the shape of a cap (107) can be placed onto a part of the permeate outflow pipe (130) which projects through the terminal element (106) not rigidly attached to the membrane stack.

## Revendications

1. Dispositif (10) destiné à la séparation de substances contenues dans des mélanges au moyen d'éléments à membranes (11) empilés et écartés les uns des autres en formant des poches, qui comportent une forure (112) pour l'évacuation d'un perméat (13) vers un tube d'évacuation du perméat (130), qui traverse et resserre l'empilement d'éléments à membranes (105), le dispositif (10) comprenant une entrée (14) pour le mélange de substances (15) et des sorties pour le rétentat (17) et le perméat (13), et le mélange de substances (15) afflue sensiblement sur l'ensemble de la surface des éléments à membranes (11) dans des compartiments (150) formés respectivement entre deux éléments à membranes (11) ou entre un élément à membrane (11) et un élément de guidage ou déviation (18), un élément d'appui (19) circulaire, disposé autour de la forure réalisée dans l'élément à membrane (11) ou dans l'élément de déviation (18), étant disposé respectivement entre deux éléments à membranes (11) ou entre un élément à membrane (11) et un élément de guidage ou déviation (18), et le système d'étanchéité entre l'élément d'appui (19) et l'élément à membrane (11) ou l'élément de guidage (18) est formé par un élément d'étanchéité (191) disposé sur la périphérie extérieure (190) de l'élément d'appui (18), **caractérisé en ce qu'**une rainure (192), qui entoure l'élément d'appui (19), est réalisée sur la périphérie extérieure (190) et l'élément d'appui (19) comporte autour de sa forure intérieure (193) une pluralité de champs (196) en saillie sur les deux surfaces (194, 195) pour former une distance axiale définie respectivement entre deux éléments d'écartement (19), entre lesquels champs sont formées respectivement des cannelures d'évacuation du perméat (197), une pluralité de saillies (198) en forme de tétons étant disposées, dans le sens radial à l'extérieur dans la zone de la bague d'appui dans laquelle sont disposés, les champs en saillie, sur l'une des surfaces (194) de l'élément d'appui (19), lesquelles saillies sont aussi destinées à centrer les éléments à membranes (11), tandis que sur l'autre surface (195), sont conçues une pluralité de forures ou cavités (199) et les saillies (198) d'un élément d'appui (19) s'engageant dans les forures ou cavités (199) de deux éléments d'appui (19) voisins.

2. Dispositif selon la revendication 1, **caractérisé en ce que** l'élément d'étanchéité (191) est un joint torique, réalisé dans un matériau polymère.

3. Dispositif selon l'une ou les deux revendications 1 et 2, **caractérisé en ce que** l'élément d'appui (19) comporte une pluralité de rainures (202) axiales, disposées autour de sa forure intérieure.

4. Dispositif selon l'une ou plusieurs revendications 1 à 3, **caractérisé en ce qu'**une pluralité de saillies (200) orientées dans le sens radial sont disposées dans la forure intérieure (193).

5. Dispositif selon l'une ou plusieurs revendications 1 à 4, **caractérisé en ce que** l'élément d'appui (19) est en matière plastique.

6. Dispositif selon la revendication 5, **caractérisé en ce que** la matière plastique est un polyvinulidènefluorure (PVDF).

7. Dispositif selon l'une ou les deux revendications 5 et 6, **caractérisé en ce que** la matière plastique est renforcée par des matériaux de charge.

8. Dispositif selon l'une ou plusieurs revendications 1 à 7, **caractérisé en ce que**, en présence d'éléments de déviation, l'épaisseur (113) des éléments à membranes (11) est égale à l'épaisseur (183) des éléments de déviation.

9. Dispositif selon l'une ou plusieurs revendications 1 à 8, **caractérisé en ce que** le diamètre extérieur de l'élément d'appui (19) est supérieur au diamètre d'un élément d'extrémité (104) d'un élément de serrage (102) en forme de disque, lequel permet de resserrer l'empilement d'éléments à membranes (105).

10. Dispositif selon la revendication 9, **caractérisé en ce que** l'un des deux éléments d'obturation (106) en forme de disque, disposés de part et d'autre de l'empilement d'éléments à membranes et permettant d'obturer un boîtier cylindrique (101) du dispositif (10), est assemblé sensiblement de manière fixe avec l'empilement d'éléments à membranes (105) resserré par les éléments de serrage (102, 103) en forme de disque.

11. Dispositif selon l'une ou les deux revendications 9 et 10, **caractérisé en ce que** les éléments de serrage (102, 103) en forme de disque peuvent être serrés l'un avec l'autre, de telle sorte que, en cours de service du dispositif (10), les quantités de dépôts apparaissant, le cas échéant, sur les éléments d'appui (19) n'entraînent pas une inétanchéité de l'empilement d'éléments à membranes (105).

12. Dispositif selon la revendication 10 ou la revendication 11 se rapportant à la revendication 10, **caractérisé en ce qu'**une douille de serrage (107), conçue sous forme de cache, peut être posée sur une partie du tube d'évacuation du perméat (130) traversant l'élément d'obturation (106) qui n'est pas assemblé de manière fixe avec l'empilement d'éléments à membranes.
